# EUROPÄISCHE PATENTSCHRIFT

(11) **EP 0 947 059 B1**
(45) Veröffentlichungstag und Bekanntmachung des Hinweises auf die Patenterteilung: **02.05.2001**
(21) Anmeldenummer: 97936597.0
(22) Anmeldetag: 05.08.1997
(51) Int. Cl.: H04B 7/26, H04Q 7/38

(54) **VERFAHREN ZUM AUFBAUEN VON TELEKOMMUNIKATIONSVERBINDUNGEN ZWISCHEN TELEKOMMUNIKATIONSGERÄTEN IN DRAHTLOSEN TELEKOMMUNIKATIONSSYSTEMEN, INSBESONDERE ZWISCHEN DECT-GERÄTEN EINES DECT-SYSTEMS**
PROCESS FOR ESTABLISHING TELECOMMUNICATION CONNECTIONS BETWEEN TELECOMMUNICATION APPARATUSES IN WIRELESS TELECOMMUNICATION SYSTEMS, IN PARTICULAR BETWEEN DECT-APPARATUSES OF A DECT-SYSTEM
PROCEDE D'ETABLISSEMENT DE LIAISONS DE TELECOMMUNICATION ENTRE DES APPAREILS DE TELECOMMUNICATION DANS DES SYSTEMES DE TELECOMMUNICATION SANS FIL, EN PARTICULIER ENTRE DES APPAREILS DECT D'UN SYSTEME DECT

(30) Priorität: 09.08.1996 DE 19632261
(43) Veröffentlichungstag der Anmeldung: 06.10.1999
(73) Patentinhaber: SIEMENS AKTIENGESELLSCHAFT, 80333 München (DE)
(72) Erfinder: LENFORT, Christoph, D-48356 Nordwalde (DE); BIELEFELD, Ludger, D-46397 Bocholt (DE)
(86) Internationale Anmeldenummer: DE9701648
(87) Internationale Veröffentlichungsnummer: WO9807245

(56) Entgegenhaltungen:
- EP-A- 0 717 578
- EP-A- 0 722 259
- DE-A- 4 447 243
- GB-A- 2 295 944
- GB-A- 2 297 014

## Beschreibung

In Nachrichtensystemen mit einer Nachrichtenübertragungsstrecke zwischen einer Nachrichtenquelle und einer Nachrichtensenke werden zur Nachrichtenverarbeitung und -übertragung Sende- und Empfangsgeräte verwendet, bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung analog oder digital ist,
3) die Nachrichtenübertragung über die Fernübertragungsstrekke drahtlos auf der Basis von diversen Nachrichtenübertragungsverfahren FDMA (**F**requency **D**ivision **M**ultiple **A**ccess), TDMA (**T**ime **D**ivision **M**ultiple **A**ccess) und/oder **C**DMA (Code **D**ivision **M**ultiple **A**ccess) - z.B. nach Funkstandards wie DECT, GSM, WACS oder PACS, IS-54, PHS, PDC etc. [vgl. IEEE Communications Magazine, January 1995, Seiten 50 bis 57; D.D. Falconer et al: "Time Division Multiple Access Methods for Wireless Personal Communications"] und/oder drahtgebunden erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z.B. eine einen Gegenstand betreffende Nachricht
(1) in Form eines Bildes,
(2) als gesprochenes Wort,
(3) als geschriebenes Wort,
(4) als verschlüsseltes Wort oder Bild übertragen werden.

Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z.B. Impulse, digitale Signale) entstehen.

Ausgehend von dieser allgemeinen Definition eines Nachrichtensystems bezieht sich die Erfindung auf ein Verfahren zum Aufbauen von Telekommunikationsverbindungen zwischen Telekommunikationsgeräten in drahtlosen Telekommunikationssystemen, insbesondere zwischen DECT-Geräten eines DECT-Systems gemäß dem Oberbegriff des Patentanspruches 1.

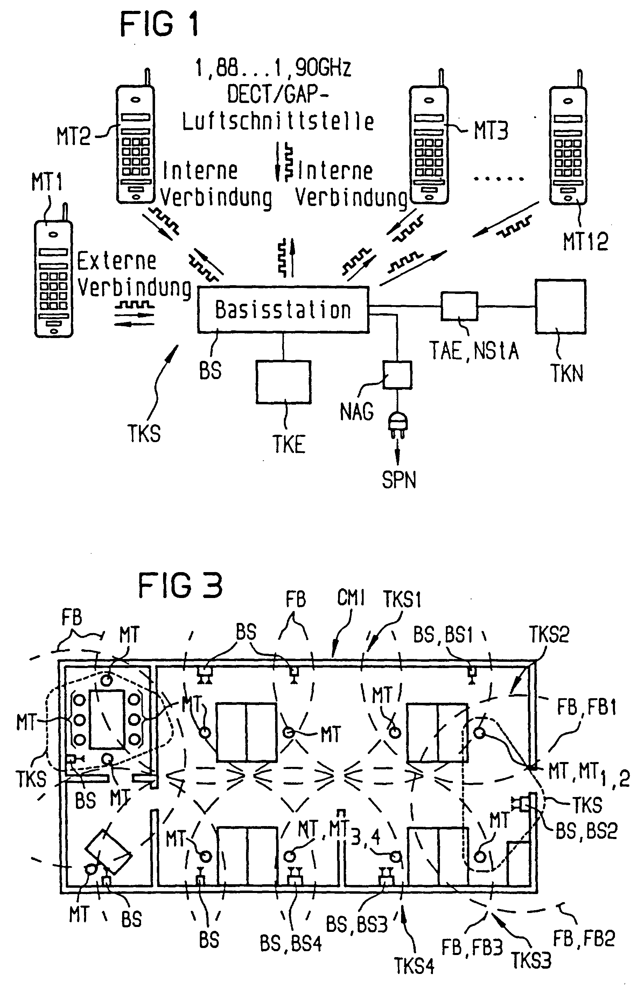

Telekommunikationssysteme der vorstehend definierten Art sind beispielsweise DECT-Systeme [**D**igital **E**nhanced (früher: **E**uropean) **C**ordless **T**elecommunication; vgl. **(1)**: Nachrichtentechnik Elektronik 42 (1992) Jan./Feb. Nr. 1, Berlin, DE; U. Pilger "Struktur des DECT-Standards", Seiten 23 bis 29 **in Verbindung mit** der ETSI-Publikation ETS 300175-1...9, Okt. 1992; **(2)**: Telcom Report 16 (1993), Nr. 1, J. H. Koch: "Digitaler Komfort für schnurlose Telekommunikation - DECT-Standard eröffnet neue Nutzungsgebiete", Seiten 26 und 27; **(3)**: tec 2/93 - Das technische Magazin von Ascom "Wege zur universellen mobilen Telekommunikation", Seiten 35 bis 42; **(4)**: Philips Telecommunication Review, Vol. 49, No. 3, Sept. 1991, R.J. Mulder:" DECT, a universal cordless access system"; **(5)**: WO 93/21719 (FIG 1 bis 3 mit dazugehöriger Beschreibung)] oder GAP-Systeme (**G**eneric **A**ccess **P**rofile; ETSI-Publikation prETS 300444, April 1995, Final Draft, ETSI, FR), die beispielsweise gemäß der Darstellung in FIGUR 1 aufgebaut sein können.

Nach dem DECT/GAP-Standard können gemäß der Darstellung in FIGUR 1 an einer DECT/GAP-Basisstation BS über eine für den Frequenzbereich zwischen 1,88 und 1,90 GHz ausgelegte DECT/GAP-Luftschnittstelle maximal 12 Verbindungen nach dem TDMA/FDMA/TDD-Verfahren (**T**ime **D**ivision **M**ultiple **A**ccess/**F**requency **D**ivision **M**ultiple **A**ccess/**T**ime **D**ivision **D**uplex) parallel zu DECT/GAP-Mobilteilen MT1...MT12 aufgebaut werden. Die Zahl 12 ergibt sich aus einer Anzahl "k" von für den Duplex-betrieb eines DECT/GAP-Systems zur Verfügung stehenden Zeitschlitzen bzw. Telekommunikationskanälen (k = 12). Die Verbindungen können dabei intern und/oder extern sein. Bei einer internen Verbindung können zwei an der Basisstation BS registrierte Mobilteile, z.B. das Mobilteil MT2 und das Mobilteil MT3, miteinander kommunizieren. Für den Aufbau einer externen Verbindung ist die Basisstation BS mit einem Telekommunikationsnetz TKN, z.B. in leitungsgebundener Form über eine Telekommunikationsanschlußeinheit TAE bzw. eine Nebenstellenanlage NStA mit einem leitungsgebundenen Telekommunikationsnetz oder gemäß der WO 95/05040 in drahtloser Form als Repeaterstation mit einem übergeordneten Telekommunikationsnetz, verbunden. Bei der externen Verbindung kann man mit einem Mobilteil, z.B. mit dem Mobilteil MT1, über die Basisstation BS, die Telekommunikationsanschlußeinheit TAE bzw. Nebenstellenanlage NStA mit einem Teilnehmer in dem Telekommunikationsnetz TKN kommunizieren. Besitzt die Basisstation BS - wie im Fall des Gigaset 951 (Siemens Schnurlostelefon, vgl. telcom Report 16, (1993) Heft 1, Seiten 26 und 27) - nur einen Anschluß zu der Telekommunikationsanschlußeinheit TAE bzw. der Nebenstellenanlage NStA, so kann nur eine externe Verbindung aufgebaut werden. Hat die Basisstation BS - wie im Fall des Gigaset 952 (Siemens Schnurlostelefon; vgl. telcom Report 16, (1993), Heft 1, Seiten 26 und 27) - zwei Anschlüsse zu dem Telekommunikationsnetz TKN, so ist zusätzlich zu der externen Verbindung mit dem Mobilteil MT1 eine weitere externe Verbindung von einem an die Basisstation BS angeschlossenen leitungsgebundenen Telekommunikationsendgerät TKE möglich. Dabei ist es prinzipiell auch vorstellbar, daß ein zweites Mobilteil, z.B. das Mobilteil MT12, anstelle des Telekommunikationsendgerätes TKE den zweiten Anschluß für eine externe Verbindung nutzt. Während die Mobilteile MT1...MT12 mit einer Batterie oder einem Akkumulator betrieben werden, ist die als schnurlose Klein-Vermittlungsanlage ausgebildete Basisstation BS über ein Netzanschlußgerät NAG an ein Spannungsnetz SPN angeschlossen.

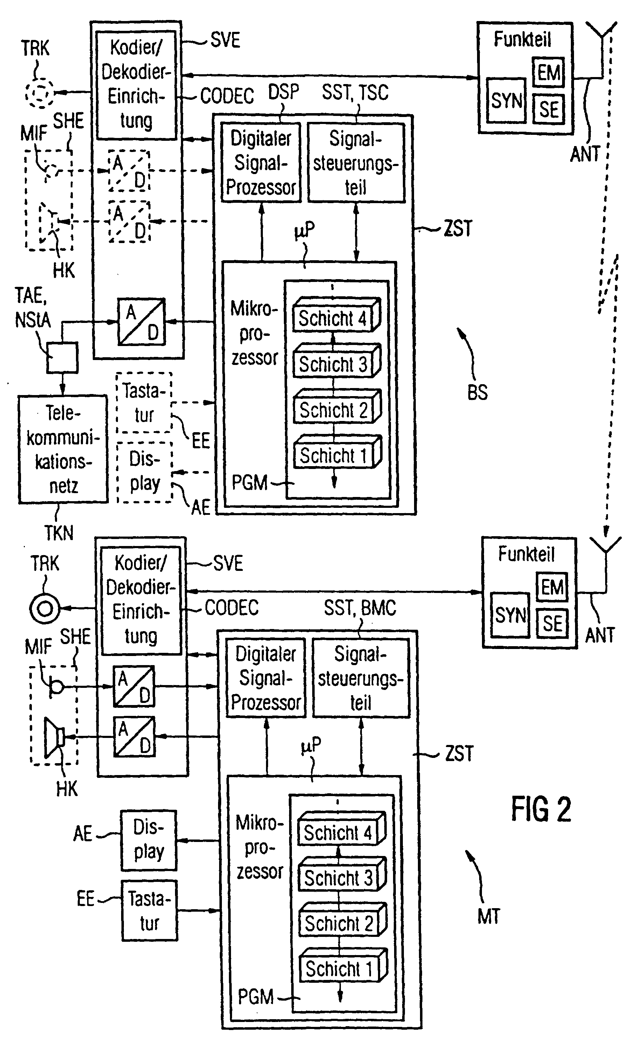

FIGUR 2 zeigt ausgehend von der Druckschrift Components 31 (1993), Heft 6, Seiten 215 bis 218; S. Althammer, D. Brückmann: "Hochoptimierte IC's für DECT-Schnurlostelefone" den prinzipiellen Schaltungsaufbau der Basisstation BS und des Mobilteils MT. Die Basisstation BS und das Mobilteil MT weisen danach ein Funkteil FKT mit einer zum Senden und Empfangen von Funksignalen zugeordneten Antenne ANT, eine Signalverarbeitungseinrichtung SVE und eine Zentrale Steuerung ZST auf, die in der dargestellten Weise miteinander verbunden sind. In dem Funkteil FKT sind im wesentlichen die bekannten Einrichtungen wie Sender SE, Empfänger EM und Synthesizer SYN enthalten. In der Signalverarbeitungseinrichtung SVE ist u.a. eine Kodier-/Dekodiereinrichtung CODEC enthalten. Die Zentrale Steuerung ZST weist sowohl für die Basisstation BS als für das Mobilteil MT einen Mikroprozessor µP mit einem nach dem OSI/ISO-Schichtenmodell [vgl. **(1)**: Unterrichtsblätter - Deutsche Telekom, Jg. 48, 2/1995, Seiten 102 bis 111; **(2)**: ETSI-Publikation ETS 300175-1...9, Oktober 1992] aufgebauten Programmodul PGM, einen Signalsteuerungsteil SST und einen Digitalen Signalprozessor DSP auf, die in der dargestellten Weise miteinander verbunden sind. Von den im Schichtenmodell definierten Schichten sind nur die unmittelbar für die Basisstation BS und das Mobilteil MT wesentlichen ersten vier Schichten dargestellt. Das Signalsteuerungssteil SST ist in der Basisstation BS als Time Switch Controller TSC und in dem Mobilteil MT als Burst Mode Controller BMC ausgebildet. Der wesentliche Unterschied zwischen den beiden Signalsteuerungsteilen TSC, BMC besteht darin, daß der basisstationsspezifische Signalsteuerungsteil TSC gegenüber dem mobilteilspezifischen Signalsteuerungsteil BMC zusätzlich Vermittlungsfunktionen (Switch-Funktionen) übernimmt.

Die prinzipielle Funktionsweise der vorstehend aufgeführten Schaltungseinheiten ist beispielsweise in der vorstehend zitierten Druckschrift Components 31 (1993), Heft 6, Seiten 215 bis 218 beschrieben.

Der beschriebene Schaltungsaufbau nach FIGUR 2 wird bei der Basisstation BS und dem Mobilteil MT gemäß deren Funktion in dem DECT/GAP-System nach FIGUR 1 durch zusätzliche Funktionseinheiten ergänzt.

Die Basisstation BS ist über die Signalverarbeitungseinrichtung SVE und der Telekommunikationsanschlußeinheit TAE bzw. der Nebenstellenanlage NStA mit dem Telekommunikationsnetz TKN verbunden. Als Option kann die Basisstation BS noch eine Bedienoberfläche aufweisen (in FIGUR 2 gestrichelt eingezeichnete Funktionseinheiten), die z.B. aus einer als Tastatur ausgebildeten Eingabeeinrichtung EE, einer als Display ausgebildeten Anzeigeeinrichtung AE, einer als Handapparat mit Mikrofon MIF und Hörkapsel HK ausgebildeten Sprech-/Höreinrichtung SHE sowie einer Tonrufklingel TRK besteht.

Das Mobilteil MT weist die bei der Basisstation BS als Option mögliche Bedienoberfläche mit den zu dieser Bedienoberfläche gehörenden vorstehend beschriebenen Bedienelementen auf.

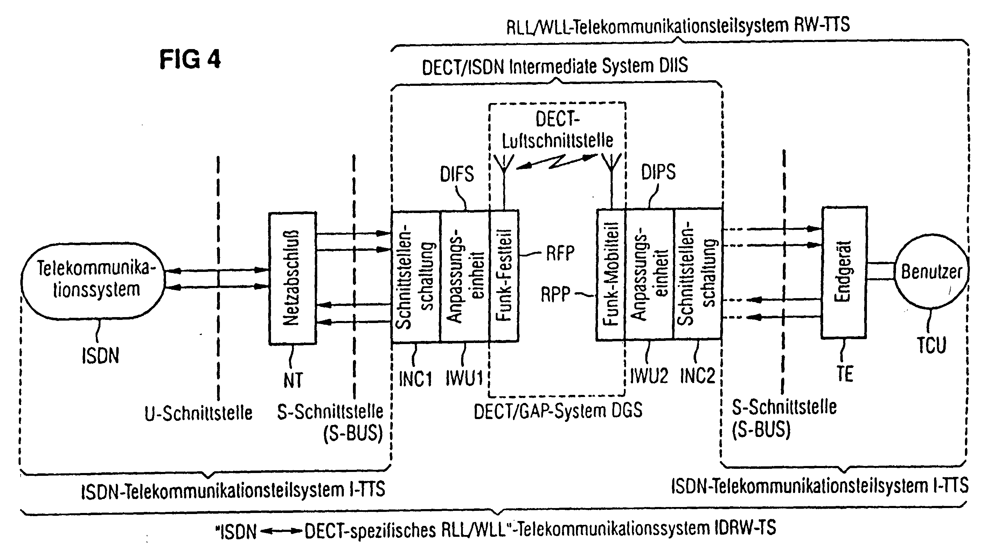

FIGUR 3 zeigt ausgehend von dem DECT-System nach FIGUR 1 ein zellulares DECT/GAP-Multisystem CMI (**C**ordless **M**ulticell **I**ntegration), bei dem mehrere der vorstehend beschriebenen DECT/GAP-Systeme TKS mit jeweils einer Basisstation BS und einem/mehreren Mobilteil/en MT an einen beliebigen geographischen Ort, z.B. in einem Verwaltungsgebäude mit großräumigen Etagenbüros, konzentriert - im Sinne einer "Hot Spot"-Anordnung - vorhanden sind. Statt eines "geschlossenen" geographischen Ortes, wie das Verwaltungsgebäude, ist aber auch ein "offener" geographischer Ort mit strategischer Telekommunikationsbedeutung, z.B. Plätze in Großstädten mit einem hohen Verkehrsaufkommen, einer großen Ansammlung von Gewerbeeinheiten und einer großen Bewegung von Menschen, für die Installation eines zellularen DECT/GAP-Multisystems CMI möglich. Ein Teil der in dem Großraumbüro angeordneten Basisstationen BS sind dabei im Unterschied zu den in den FIGUREN 1 und 2 gezeigten Basisstationen gemäß der WO 94/10764 als Antenna Diversity-Basisstationen ausgebildet. Die Konzentration der DECT/GAP-Systeme TKS ist dabei so ausgeprägt (lückenlose Funkabdeckung des geographischen Ortes), daß einzelne DECT/GAP-Systeme TKS durch die sich überlappenden zellularen DECT/GAP-Funkbereiche FB in der gleichen Umgebung arbeiten.

Gleiche Umgebung kann dabei je nach Überlappungsgrad bedeuten, daß
a) eine erste Basisstation BS1 eines ersten Telekommunikationssystems TKS1 in einem ersten Funkbereich FB1 und eine zweite Basisstation BS2 eines zweiten Telekommunikationssystems TKS2 in einem zweiten Funkbereich FB2 angeordnet sind und Telekommunikationsverbindungen zu mindestens einem Mobilteil MT_{1,2} aufbauen können,
b) eine dritte Basisstation BS3 eines dritten Telekommunikationssystems TKS3 und eine vierte Basisstation BS4 eines vierten Telekommunikationssystems TKS4 in einem gemeinsamen dritten Funkbereich FB3 angeordnet sind und Telekommunikationsverbindungen zu mindestens einem Mobilteil MT_{3,4} aufbauen können.

FIGUR 4 zeigt ausgehend von den Druckschriften "Nachrichtentechnik Elektronik, Berlin 45, (1995), Heft 1, Seiten 21 bis 23 und Heft 3, Seiten 29 und 30" sowie IEE Colloquium 1993, 173; (1993), Seiten 29/1 - 29/7; W.Hing, F.Halsall: "Cordless access to the ISDN basic rate service" auf der Basis eines **D**ECT**/I**SDN **I**ntermediate **S**ystems DIIS gemäß der ETSI-Publikation prETS 300xxx, Version 1.10, September 1996 ein "**I**SDN ↔ **D**ECT-spezifisches **R**LL/**W**LL"-**T**elekommunikationssystem IDRW-TS (**I**ntegrated **S**ervices **D**igital **N**etwork ↔ **R**adio in the **L**ocal **L**oop/**W**ireless in the **L**ocal **L**oop) mit einem **I**SDN-**T**elekommunikations**t**eil**s**ystem I-TTS [vgl. Druckschrift "Nachrichtentechnik Elektronik, Berlin 41-43, **T**eil: 1 bis 10, **T1**: (1991) Heft 3, Seiten 99 bis 102; **T2**: (1991) Heft 4, Seiten 138 bis 143; **T**3: (1991) Heft 5, Seiten 179 bis 182 und Heft 6, Seiten 219 bis 220; **T**4: (1991) Heft 6, Seiten 220 bis 222 und (1992) Heft 1, Seiten 19 bis 20; **T**5: (1992) Heft 2, Seiten 59 bis 62 und (1992) Heft 3, Seiten 99 bis 102; **T**6: (1992) Heft 4, Seiten 150 bis 153; **T**7: (1992) Heft 6, Seiten 238 bis 241; **T**8: (1993) Heft 1, Seiten 29 bis 33; **T**9: (1993) Heft 2, Seiten 95 bis 97 und (1993) Heft 3, Seiten 129 bis 135; **T**10: (1993) Heft 4, Seiten 187 bis 190;"] und einem DECT-spezifischen **R**LL/**W**LL-**T**elekommunikations**t**eil**s**ystem RW-TTS.

Das DECT/ISDN Intermediate Sysem DIIS bzw. das RLL/WLL-Telekommunikationsteilsystem RW-TTS basiert dabei vorzugsweise auf ein **D**ECT/**G**AP-**S**ystem DGS wie es beispielsweise in FIGUR 1 dargestellt ist.

Das DECT/ISDN Intermediate System DIIS bzw. das RLL/WLL-Telekommunikationsteilsystem RW-TTS kann alternativ auch auf einem GSM-System basieren (**G**roupe **S**péciale **M**obile oder **G**lobal **S**ystem for **M**obile Communication; vgl. Informatik Spektrum 14 (1991) Juni, Nr. 3, Berlin, DE; A.Mann: "Der GSM-Standard - Grundlage für digitale europäische Mobilfunknetze", Seiten 137 bis 152). Stattdessen ist es im Rahmen eines hybriden Telekommunikationssystems auch möglich, daß das ISDN-Telekommunikationsteilsystem I-TTS als GSM-System ausgebildet ist.

Darüber hinaus kommen als weitere Möglichkeiten für die Realisierung des DECT/ISDN Intermediate System DIIS bzw. des RLL/WLL-Telekommunikationsteilsystems RW-TTS oder des ISDN-Telekommunikationsteilsystems I-TTS die eingangs erwähnten Systeme sowie zukünftige Systeme in Frage, die auf die bekannten Vielfachzugriffsmethoden FDMA, TDMA, CDMA (**F**requency **D**ivision **M**ultiple **A**ccess, **T**ime **D**ivision **M**ultiple **A**ccess, **C**ode **D**ivision **M**ultiple **A**ccess) und hieraus gebildete hybride Vielfachzugriffsmethoden basieren.

Die Verwendung von Funkkanälen (z. B. DECT-Kanälen) in klassischen leitungsgebundenen Telekommunikationssystemen, wie dem ISDN, gewinnt zunehmend an Bedeutung, insbesondere vor dem Hintergrund zukünftiger alternativer Netzbetreiber ohne eigenes komplettes Drahtnetz.

So sollen z. B. bei dem RLL/WLL-Telekommunikationsteilsystem RW-TTS die drahtlose Anschlußtechnik RLL/WLL (**R**adio in the **L**ocal **L**oop/**W**ireless in the **L**ocal **L**oop) z.B. unter der Einbindung des DECT-Systems DS dem ISDN-Teilnehmer ISDN-Dienste an Standard-ISDN-Schnittstellen verfügbar gemacht werden (vgl. FIGUR 4).

In dem "ISDN ↔ DECT-spezifischen RLL/WLL"-Telekommunikationssystem IDRW-TS nach FIGUR 4 ist ein Telekommunikationsteilnehmer (Benutzer) TCU (**T**ele-**C**ommunication **U**ser) mit seinem Endgerät TE (**T**erminal **E**ndpoint; **T**erminal **E**quipment) z.B. über eine standardisierte S-Schnittstelle (S-BUS), das als lokale Nachrichtenübertragungsschleife ausgebildete - vorzugsweise DECT-spezifische und in dem RLL/WLL-Telekommunikationsteilsystem RW-TTS enthaltene - DECT/ISDN Intermediate System DIIS (erstes Telekommunikationsteilsystem), eine weitere standardisierte S-Schnittstelle (S-BUS), einen Netzabschluß NT (**N**etwork **T**ermination) und eine standardisierte U-Schnittstelle des ISDN-Telekommunikationsteilsystems I-TTS (zweites Telekommunikationsteilsystem) in die ISDN-Welt mit den darin verfügbaren Diensten eingebunden.

Das erste Telekommunikationsteilsystem DIIS besteht im wesentlichen aus zwei Telekommunikationsschnittstellen, einer ersten Telekommunikationsschnittstelle DIFS (**D**ECT **I**ntermediate **F**ixed **S**ystem) und einer zweiten Telekommunikationsschnittstelle DIPS (**D**ECT **I**ntermediate **P**ortable **S**ystem), die drahtlos, z.B. über eine DECT-Luftschnittstelle, miteinander verbunden sind. Wegen der quasi-ortsgebundenen ersten Telekommunikationsschnittstelle DIFS bildet das erste Telekommunikationsteilsystem DIIS die vorstehend in diesem Zusammenhang definierte lokale Nachrichtenübertragungsschleife. Die erste Telekommunikationsschnittstelle DIFS enthält ein Funk-Festteil RFP (**R**adio **F**ixed **P**art), eine Anpassungseinheit IWU1 (**I**nter**W**orking **U**nit) und eine Schnittstellenschaltung INC1 (**I**Nterface **C**ircuitry) zur S-Schnittstelle. Die zweite Telekommunikationsschnittstelle DIPS enthält ein Funk-Mobilteil RPP (**R**adio **P**ortable **P**art) und eine Anpassungseinheit IWU2 (**I**nter**W**orking **U**nit) und eine Schnittstellenschaltung INC2 (**I**Nterface **C**ircuitry) zur S-Schnittstelle. Das Funk-Festteil RFP und das Funk-Mobilteil RPP bilden dabei das bekannte DECT/GAP-System DGS.

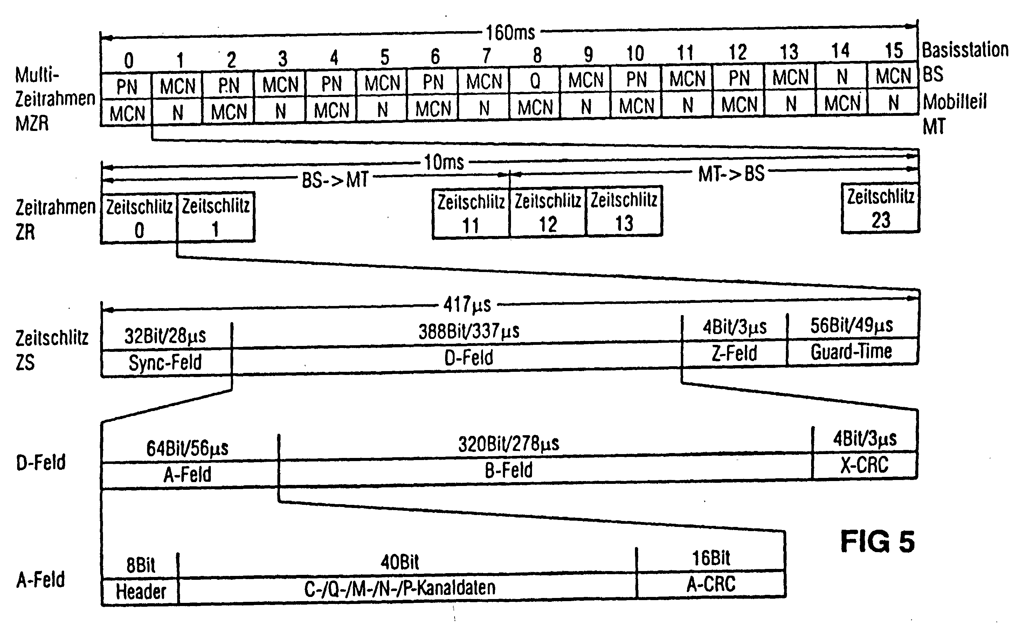

FIGUR 5 zeigt in Anlehnung an die Druckschrift "Nachrichtentechnik Elektronik 42 (1992) Jan./Feb., Nr. 1, Berlin, DE; U. Pilger: "Struktur des DECT-Standards", Seiten 23 bis 29 in Verbindung mit ETS 300 175-1...9, Oktober 1992" die TDMA-Struktur des DECT/GAP-Systems TKS. Das DECT/GAP-System ist ein bezüglich der Vielfachzugriffsverfahren hybrides System, bei dem nach dem FDMA-Prinzip auf zehn Frequenzen im Frequenzband zwischen 1,88 und 1,9 GHz Funknachrichten nach dem TDMA-Prinzip gemäß FIGUR 5 in einer vorgegebenen zeitlichen Abfolge von der Basisstation BS zum Mobilteil MT und vom Mobilteil MT zur Basisstation BS (**T**ime **D**ivision **D**uplex-Betrieb) gesendet werden können. Die zeitliche Abfolge wird dabei von einem Multi-Zeitrahmen MZR bestimmt, der alle 160 ms auftritt und der 16 Zeitrahmen ZR mit jeweils einer Zeitdauer von 10 ms aufweist. In diesen Zeitrahmen ZR werden nach Basisstation BS und Mobilteil MT getrennt Informationen übertragen, die einen im DECT-Standard definierten C-, M-, N-, P-, Q-Kanal betreffen. Werden in einem Zeitrahmen ZR Informationen für mehrere dieser Kanäle übertragen, so erfolgt die Übertragung nach einer Prioritätenliste mit M > C > N und P > N. Jeder der 16 Zeitrahmen ZR des Multi-Zeitrahmens MZR unterteilt sich wiederum in 24 Zeitschlitze ZS mit jeweils einer Zeitdauer von 417 µs, von denen 12 Zeitschlitze ZS (Zeitschlitze 0 ... 11) für die Übertragungsrichtung "Basisstation BS → Mobilteil MT" und weitere 12 Zeitschlitze ZS (Zeitschlitze 12 ... 23) für die Übertragungsrichtung "Mobilteil MT → Basisstation BS" bestimmt sind. In jedem dieser Zeitschlitze ZS werden nach dem DECT-Standard Informationen mit einer Bitlänge von 480 Bit übertragen. Von diesen 480 Bit werden 32 Bit als Synchronisationsinformation in einem SYNC-Feld und 388 Bit als Nutzinformation in einem D-Feld übertragen. Die restlichen 60 Bit werden als Zusatzinformationen in einem Z-Feld und als Schutzinformationen in einem Feld "Guard-Time" übertragen. Die als Nutzinformationen übertragenen 388 Bit des D-Feldes unterteilen sich wiederum in ein 64 Bit langes A-Feld, ein 320 Bit langes B-Feld und ein 4 Bit langes "X-CRC"-Wort. Das 64 Bit lange A-Feld setzt sich aus einem 8 Bit langen Datenkopf (Header), einem 40 Bit langen Datensatz mit Daten für die C-,Q-,M-,N-,P-Kanäle und einem 16 Bit langen "A-CRC"-Wort zusammen.

Für den Aufbau von Telekommunikationsverbindungen zwischen der/den Basisstation/en BS und den Mobilteilen MT in den DECT-Systemen gemäß den FIGUREN 1 bis 5 ist nach dem DECT-Standard beispielsweise die nachfolgend beschriebene Prozedur vorgesehen.

Die Basisstation BS (**R**adio **F**ixed **P**art RFP) gemäß den FIGUREN 1 bis 5 sendet über die DECT-Luftschnittstelle in regelmäßigen Zeitabständen auf Simplex-Übertragungswegen, den sogenannten Dummy-Bearer, Broadcast-Införmationen, die von dem Mobilteil MT (**R**adio **P**ortable **P**art RPP) gemäß den FIGUREN 1 bis 5 empfangen werden und diesem für die Synchronisation und den Verbindungsaufbau mit der Basisstation dienen. Die Broadcast-Informationen müssen nicht unbedingt auf einen Dummy-Übertragungsweg (Dummy Bearer) gesendet werden.

Es ist auch möglich, daß kein Dummy-Übertragungsweg vorhanden ist, weil die Basisstation bereits mindestens eine Telekommunikationsverbindung, einen sogenannten Traffic-Übertragungsweg (Traffic-Bearer), zu einem anderen Mobilteil unterhält und auf dem es dann die nötigen Broadcast-Informationen sendet. In diesem Fall kann das Mobilteil, das eine Telekommunikationsverbindung zu der Basisstation haben möchte, die Broadcast-Informationen - wie beim Übertragen der Broadcast-Informationen auf dem Dummy-Übertragungsweg - empfangen.

Die Broadcast-Informationen enthalten - gemäß der ETSI-Publikation ETS 300175-3, Oktober 1992, Kapitel 9.1.1.1 - Informationen über Zugriffsrechte, Systeminformationen und Paging-Informationen.

In den Systeminformationen sind darüber hinaus Zusatzinformationen enthalten, die das Mobilteil darüber informieren, welche TDMA-Zeitschlitze an der Basisstation verfügbar sind. Diese Zusatzinformation wird im DECT-Standard (ETSI-Publikation ETS 300175-3, Oktober 1992, Kapitel 11.4.1, Note 4) und dem GAP-Standard, der eine Untermenge des DECT-Standards ist und dem die Aufgabe zukommt, die Interoperabilität der DECT-Luftschnittstelle für Telefonanwendungen sicherzustellen (vgl. ETSI-Publikation prETS 300444, April 1995, Kapitel 10.3.3) als "Blind Slot"-Information oder "Poor Channel"-Information bezeichnet. Das Senden der Zusatzinformation beruht auf den in TDMA-spezifischen Telekommunikationssystemen, wie das DECT-System, auftretenden "Blind Slot-Effekt". Der "Blind Slot-Effekt" tritt insbesondere dann auf, wenn
a) Basisstationen gemäß FIGUR 2 nur ein Funkteil mit einem Sender und Empfänger aufweisen und somit während eines Zeitschlitzes nur auf einer Frequenz senden oder empfangen können; unterhält die Basisstation eine Duplex-Funkverbindung in einem bestimmten Zeitschlitzpaar, so kann sie auf diesem Zeitschlitzpaar keine weiteren Funkverbindungen zu anderen Mobilteilen aufbauen;
b) Basisstationen gemäß der WO 94/10811 durch technische Ristriktionen (z.B. DECT-Basisstationen mit einem "Slow Hopping"-Funkteil) in bestimmten Zeitschlitzen nicht senden oder empfangen können.

Der Verbindungsaufbau erfolgt nach den Regeln der Kanalselektion (vgl. ETSI-Publikation ETS 300175-3, Oktober 1992, Kapitel 11.4), wonach ein neuer Kanal für den Aufbau einer neuen Verbindung selektiert und eine Verbindungsanforderung (SETUP-Anforderung) abgesetzt wird. Um zu verhindern, daß die Mobilteile Anforderungsinformationen zum Aufbau einer Verbindung (SETUP-Anforderungen) auf Zeitschlitzen senden, auf denen die Basisstation nicht empfangsbereit ist, sendet die Basisstation die vorstehend erwähnte "Blind Slot"-Information auf dem Dummy-Übertragungsweg. Aus dieser Zusatzinformation geht beispielsweise hervor, auf welchen Zeitschlitzen (Slots) die Basisstation empfangsbereit ist. Das Senden der Zusatzinformation ist aber nicht für alle Basisstationen vorgeschrieben.

Nach dem GAP-Standard (vgl. ETSI-Publikation prETS 300444, April 1995, Kapitel 10.3.3) ist das Senden der Zusatzinformation zwar für solche Basisstationen vorgeschrieben, die aufgrund der vorstehend erwähnten technischen Ristriktionen (Slow Hopping-Funkteil) auf einigen Zeitschlitzen nicht empfangsbereit sind, allerdings muß diese dann gemäß dem GAP-Standard mindestens alle 10 s gesendet werden.

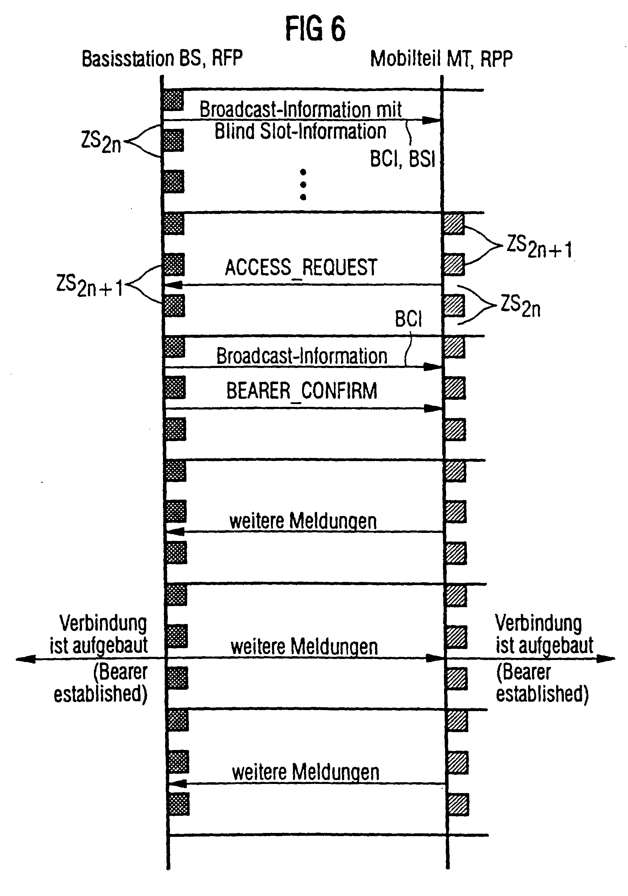

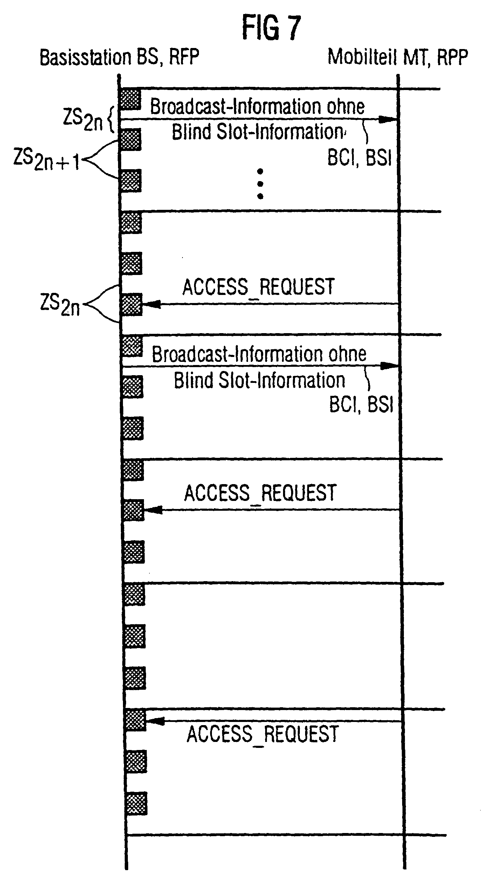

Welche Bedeutung der Zusatzinformation (Blind Slot-Information) bezüglich des Verbindungsaufbaus zwischen Basisstation und Mobilteil eines TDMA-spezifischen Schnurlos-Telekommunikationssystems (z.B. eines ein- oder mehrzelligen DECT-Systems) zukommt, wird durch das nachfolgende DECT-spezifische Szenario sowie anhand der FIGUREN 6 und 7 erläutert.

Unmittelbar nach Eintritt eines Mobilteils in eine Funkzelle liegt die "Blind Slot"-Information in diesem Mobilteil noch nicht vor. Solange diese Information von dem Mobilteil auch noch nicht empfangen worden ist, geht dieses davon aus, daß alle Zeitschlitze an der Basisstation in der Funkzelle belegbar (frei) sind. Sind beispielsweise in einem DECT-Mehrzellensystem an allen synchronen Basisstationen die gleichen Zeitschlitze aufgrund der vorstehend erwähnten technischen Ristriktionen (Slow Hopping-Funkteil) gesperrt, so ist der Störsignalpegel auf diesen Zeitschlitzen auf allen Frequenzen besonders gering. Aus diesem Grund würden diese Zeitschlitze von der Kanalselektion in dem Mobilteil, wenn die "Blind Slot"-Information noch nicht zur Verfügung steht, bevorzugt selektiert.

FIGUR 6 zeigt ausgehend von den FIGUREN 1 bis 5 ein Anreiz-Zustands-Diagramm für den Aufbau einer Telekommunikationsverbindung zwischen einer Basisstation BS, RFP und einem Mobilteil MT, RPP mit einer Zusatzinformation ("Blind Slot"-Information). Von der Basisstation BS, RFP wird in einem Zeitschlitz ZS₂ₙ eine Broadcast-Information BCI mit einer Zusatzinformation (Blind Slot-Information) BSI zum Mobilteil MT, RPP gesendet. Mit der Zusatzinformation BSI wird dem Mobilteil MT, RPP beispielsweise mitgeteilt, daß alle geraden Zeitschlitze ZS₂ₙ mit n ∈ {0...23} an der Basisstation BS, RFP für Telekommunikationsverbindungen belegbar (frei) sind. Hieraus ergibt sich automatisch, daß alle ungeraden Zeitschlitze ZS₂ₙ₊₁ an der Basisstation BS, RFP für Telekommunikationsverbindungen nicht zur Verfügung stehen. Die ungeraden Zeitschlitze ZS₂ₙ₊₁ sind in der FIGUR 6 als schwarze Kästchen dargestellt. Die an der Basisstation BS, RFP verfügbaren Zeitschlitze können aber auch alle ungeraden Zeitschlitze ZS₂ₙ₊₁ sein. Ebenso kann die Zusatzinformation BSI alternativ über die an der Basisstation BS, RFP nicht verfügbaren Zeitschlitze informieren. Die Tatsache, daß an der Basisstation BS, RFP gemäß FIGUR 5 alle ungeraden Zeitschlitze ZS₂ₙ₊₁ für Telekommunikationsverbindungen nicht zur Verfügung stehen, zeigt dem Mobilteil MT, RPP, daß es sich bei der Basisstation BS, RFP womöglich um eine Basisstation mit einem "Slow Hopping"-Funkteil handelt. Durch die Zusatzinformation BSI kann das Mobilteil MT, RPP seinerseits alle ungeraden Zeitschlitze ZS₂ₙ₊₁ als nicht für den Verbindungsaufbau zu verwendende Zeitschlitze markieren (schraffierte Kästchen in FIGUR 6).

Möchte das Mobilteil MT, RPP im folgenden eine Telekommunikationsverbindung zur Basisstation BS, RFP aufbauen, so überträgt es in einem der ihr als freie Zeitschlitze ZS₂ₙ mitgeteilten Zeitschlitze gemäß dem DECT-Standard (vgl.-ETSI-Publikation ETS 300175-3, Oktober 1992, Kapitel 10.5) als SETUP-Anforderungsinformation eine erste Meldung "ACCESS_REQUEST" zur Basisstation BS, RFP. Nach dem Erhalt dieser ersten Meldung kann die Basisstation BS, RFP ihrerseits weitere Broadcast-Informationen BCI zum Mobilteil MT, RPP übertragen. Die von dem Mobilteil MT, RPP gesendete erste Meldung wird von der Basisstation BS, RFP nach dem DECT-Standard (vgl. ETSI-Publikation ETS 300175-3, Oktober 1992, Kapitel 10.5) mit einer zweiten Meldung "BEARER_CONFIRM" beantwortet (Antwortinformation). Nach der Übertragung der zweiten Meldung werden gemäß dem DECT-Standard weitere Meldungen zwischen der Basisstation BS, RFP und dem Mobilteil MT, RPP ausgetauscht, bevor die von dem Mobilteil MT gewünschte Telekommunikationsverbindung mit der Basisstation BS, RFP schließlich aufgebaut ist (Bearer Established).

FIGUR 7 zeigt in Anlehnung an FIGUR 6 ein Anreiz-Zustands-Diagramm für den Aufbau einer Telekommunikationsverbindung zwischen einer Basisstation BS, RFP und einem Mobilteil MT, RPP ohne jegliche Zusatzinformation ("Blind Slot"-Information). Von der Basisstation BS, RFP wird in einem Zeitschlitz ZS₂ₙ eine Broadcast-Information BCI ohne eine Zusatzinformation (Blind Slot-Information) BSI zum Mobilteil MT, RPP gesendet.

Das Mobilteil MT, RPP, das im folgenden eine Telekommunikationsverbindung zur Basisstation BS, RFP aufbauen möchte, überträgt nach einem durch die Kanalselektion z.B. anhand des Störsignalpegels selektierten Zeitschlitz gemäß dem DECT-Standard (vgl. ETSI-Publikation ETS 300175-3, Oktober 1992, Kapitel 10.5) als SETUP-Anforderungsinformation wieder die erste Meldung "ACCESS_REQUEST" zur Basisstation BS, RFP (erster Versuch eines Verbindungsaufbaus). Im vorliegenden Fall ist der von der Kanalselektion ausgesuchte Zeitschlitz jedoch ein ungerader Zeitschlitz ZS₂ₙ₊₁, der an der Basisstation BS, RFP nicht zur Verfügung steht. Alternativ ist aber auch möglich, daß die erste Meldung aufgrund von Störungen auf der Funkstrecke nicht bei der Basisstation BS, RFP angekommen ist. In beiden Fällen erkennt das Mobilteil MT, RPP, daß der erste Versuch eine Verbindung zur Basisstation BS, RFP aufzubauen, fehlgeschlagen hat daran, daß es die zweite Meldung "BEARER_CONFIRM" von der Basisstation BS, RFP entweder absichtlich, weil der verwendete Zeitschlitz ein ungerader Zeitschlitz gewesen ist oder unabsichtlich, weil es wieder eine Störung auf der Funkstrecke gegeben hat, nicht erhalten hat.

Das Mobilteil MT, RPP überträgt daraufhin erneut, nachdem zuvor beispielsweise wieder eine Broadcast-Information BCI ohne eine Zusatzinformation (Blind Slot-Information) BSI zum Mobilteil MT, RPP gesendet worden ist, nach einem durch die Kanalselektion z.B. anhand des Störsignalpegels selektierten Zeitschlitz, der u.U. der gleiche wie beim ersten Versuch eines Verbindungsaufbaus sein kann, gemäß dem DECT-Standard (vgl. ETSI-Publikation ETS 300175-3, Oktober 1992, Kapitel 10.5) die erste Meldung "ACCESS_REQUEST" zur Basisstation BS, RFP (zweiter Versuch eines Verbindungsaufbaus). Auch dieser von der Kanalselektion ausgesuchte Zeitschlitz ist wieder ein ungerader Zeitschlitz ZS₂ₙ₊₁, der an der Basisstation BS, RFP nicht zur Verfügung steht. Alternativ ist aber auch wieder möglich, daß die erste Meldung aufgrund von Störungen auf der Funkstrecke nicht bei der Basisstation BS, RFP angekommen ist. In beiden Fällen erkennt das Mobilteil MT, RPP wieder, daß der zweite Versuch, eine Verbindung zur Basisstation BS, RFP aufzubauen, ebenfalls fehlgeschlagen hat daran, daß es die zweite Meldung "BEARER_CONFIRM" von der Basisstation BS, RFP entweder absichtlich, weil der verwendete Zeitschlitz ein ungerader Zeitschlitz gewesen ist oder unabsichtlich, weil es wieder eine Störung auf der Funkstrecke gegeben hat, nicht erhalten hat.

Das Mobilteil MT, RPP unternimmt daraufhin einen dritten Versuch. Im vorliegenden Fall schlägt auch dieser aus den angegebenen Gründen fehl, so daß es gemäß FIGUR 7 zu keinem Verbindungsaufbau kommt.

Nach dem DECT-Standard ist es jedoch vorgesehen, 10 Versuche für einen MAC-Schichtaufbau (vgl. ETSI-Publikation ETS 300175-3, Oktober 1992, Kapitel 10.2 iVm Annex A.2 - Konstante N200) und 15 Versuche für einen Bearer-Handover (vgl. ETSI-Publikation ETS 300175-3, Oktober 1992, Kapitel 10.6 iVm Annex A.2 - Konstante N202) zuzulassen.

Erreicht die Anzahl der Versuche für einen MAC-Schichtaufbau (Verbindungsaufbau vom Typ I) bzw. für einen Bearer-Handover (Verbindungsaufbau vom Typ II) den jeweils vorstehend angegebenen Wert, dann ist ein Verbindungsaufbau nicht möglich.

Die erste Meldung wird von dem Mobilteil MT, RPP solange übertragen, bis
a) das Mobilteil MT, RPP noch keine zweite Meldung erhalten hat,
b) die 10 Versuche für einen MAC-Schichtaufbau bzw. die 15 Versuche für einen Bearer-Handover noch nicht überschritten worden sind,
c) eine m-te erste Meldung, die nach dem Erhalt der Zusatzinformation noch gesendet wird, übertragen worden ist.

Aus der GB-2 297 014 A ist ein Verfahren zum Telekommunikations- und Handover-Verbindungsaufbau für ein tragbares Funktelefon (Mobilteil), das in einem digitalen zellularen Funktelefonsystem FDMA/TDMA-Telekommunikationsverbindungen zu Basisstationen aufbauen kann, bekannt, bei dem ein leistungsfähiger dynamischer Kanalzuordnungsalgorithmus unabhängig von dem Vorliegen und der Genauigkeit von von der Basisstation zu dem Mobilteil übertragenen Zusatzinformationen (Blind Slot-Informationen) zur Anwendung kommt. Der Algorithmus zeichnet sich im wesentlichen dadurch aus, daß jeder Telekommunikationskanal in einem TDMA-Zeitschlitz, auf dem ein Versuch des Mobilteils zum Telekommunikationsserbindungsaufbau mit der Basisstation fehlgeschlagen hat, markiert und somit für weitere Versuche zum Telekommunikationsverbindungsaufbau ausgeschlossen wird.

Die der Erfindung zugrundeliegende Aufgabe besteht darin, Telekommunikationsverbindungen zwischen ersten Telekommunikationsgeräten und zweiten Telekommunikationsgeräten in drahtlosen Telekommunikationssystemen, insbesondere zwischen einem DECT-Festteil (Fixed Part) und einem DECT-Mobilteil (Portable Part) eines DECT-Systems, wenn keine die aufzubauenden Telekommunikationsverbindungen betreffende Zusatzinformationen vorliegen, zum einen schneller aufzubauen und zum anderen die Wahrscheinlichkeit zu erhöhen, daß es überhaupt zu einem Verbindungsaufbau kommt.

Diese Aufgabe wird ausgehend von dem in dem Oberbegriff des Patentanspruches 1 definierten Verfahren durch die in dem Kennzeichen des Patentanspruches 1 angegebenen Merkmale gelöst.

Die der Erfindung zugrundeliegende Idee besteht im wesentlichen darin, Funkkanäle (z.B. Matrixspalten bzw. Matrixzeilen oder Matrixelemente einer TDMA/FDMA-Matrix, die z.B. gemäß einer hybriden das TDMA-Prinzip enthaltenden Vielfachzugriffsmethode aufgebaut ist), die bei fehlgeschlagenen Versuchen zum Aufbauen von Telekommunikationsverbindungen zwischen ersten Telekommunikationsgeräten und zweiten Telekommunikationsgeräten in drahtlosen Telekommunikationssystemen der eingangs genannten Art - insbesondere zwischen einem DECT-Festteil (Fixed Part) und einem DECT-Mobilteil (Portable Part) eines DECT-Systems - benutzt worden sind, für weitere Versuche eine Verbindung aufzubauen zumindest temporär als nicht verwendbare Funkkanäle zu markieren.

Vorteilhafte Weiterbildungen der Erfindung sind in den Unteransprüchen angegeben.

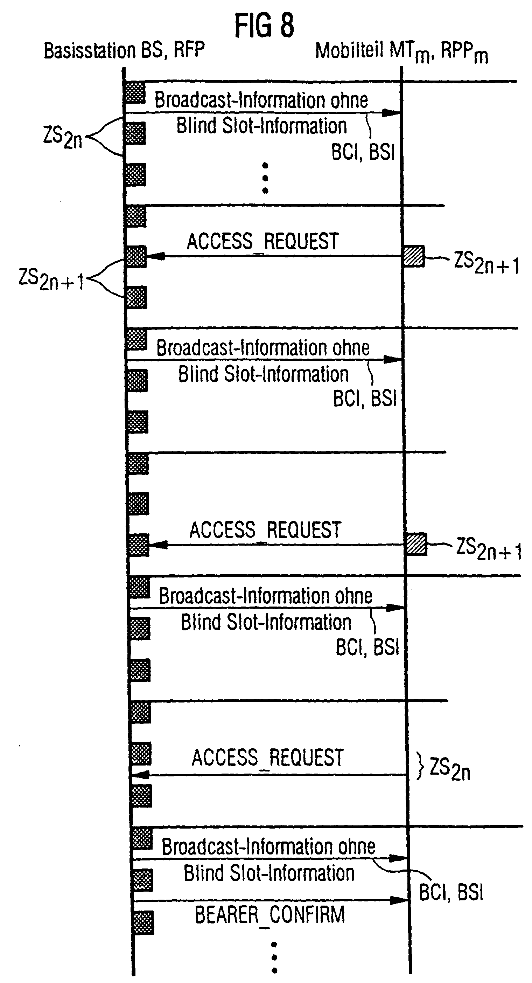

Ein Ausführungsbeispiel der Erfindung wird anhand der FIGUR 8 erläutert.

FIGUR 8 zeigt ausgehend von der FIGUR 7 ein Anreiz-Zustands-Diagramm für den Aufbau einer Telekommunikationsverbindung zwischen einer Basisstation BS, RFP und einem gegenüber dem Mobilteil MT, RPP nach FIGUR 7 modifizierten Mobilteil MTₘ, RPPₘ ohne jegliche Zusatzinformation ("Blind Slot"-Information). Von der Basisstation BS, RFP wird in einem Zeitschlitz ZS₂ₙ eine Broadcast-Information BCI ohne eine Zusatzinformation (Blind Slot-Information) BSI zum Mobilteil MTₘ, RPPₘ gesendet.

Möchte das Mobilteil MTₘ, RPPₘ im folgenden eine Telekommunikationsverbindung zur Basisstation BS, RFP aufbauen, so überträgt es - wie nach FIGUR 7 - nach einem durch die Kanalselektion z.B. anhand des Störsignalpegels selektierten Zeitschlitz gemäß dem DECT-Standard (vgl. ETSI-Publikation ETS 300175-3, Oktober 1992, Kapitel 10.5) als SETUP-Anforderungsinformation die erste Meldung "ACCESS_REQUEST" zur Basisstation BS, RFP (erster Versuch eines Verbindungsaufbaus). Im vorliegenden Fall ist der von der Kanalselektion ausgesuchte Zeitschlitz jedoch ein ungerader Zeitschlitz ZS₂ₙ₊₁, der an der Basisstation BS, RFP nicht zur Verfügung steht. Alternativ ist auch hier wieder möglich, daß die erste Meldung aufgrund von Störungen auf der Funkstrecke nicht bei der Basisstation BS, RFP angekommen ist. In beiden Fällen erkennt das Mobilteil MTₘ, RPPₘ, daß der erste Versuch eine Verbindung zur Basisstation BS, RFP aufzubauen, fehlgeschlagen hat daran, daß es die zweite Meldung "BEARER_CONFIRM" von der Basisstation BS, RFP entweder absichtlich, weil der verwendete Zeitschlitz ein ungerader Zeitschlitz gewesen ist oder unabsichtlich, weil es wieder eine Störung auf der Funkstrecke gegeben hat, nicht erhalten hat.

Bevor das Mobilteil MTₘ, RPPₘ einen weiteren Versuch startet, markiert es den Zeitschlitz, auf den es zuvor erstmalig vergebens versucht hat, eine Verbindung zu der Basisstation BS, RFP aufzubauen, als einen - wie die ungeraden Zeitschlitze ZS₂ₙ₊₁ - nicht verfügbaren Zeitschlitz. In FIGUR 8 ist dieser nicht verfügbare Zeitschlitz wieder als schraffiertes Kästchen dargestellt. Die Markierung erfolgt deshalb, weil das Mobilteil MTₘ, RPPₘ auf diese Weise im Unterschied zu den Verhältnissen gemäß FIGUR 7 die Anzahl möglicher, für den Verbindungsaufbau in Frage kommender Zeitschlitze gezielt herabsetzt und dadurch - insbesondere aufgrund der bei der Beschreibung der FIGUR 7 angesprochenen Gefahr, daß durch die Störsignalpegelauswertung bei der Kanal- bzw. Zeitschlitzselektion immer der gleiche Zeitschlitz verwendet wird - die Wahrscheinlichkeit für das Zustandekommen einer Verbindung bei weiteren Versuchen erhöht.

Das Mobilteil MTₘ, RPPₘ überträgt anschließend erneut, nachdem zuvor beispielsweise wieder eine Broadcast-Information BCI ohne eine Zusatzinformation (Blind Slot-Information) BSI zum Mobilteil MTₘ, RPPₘ gesendet worden ist, nach einem durch die Kanalselektion z.B. anhand des Störsignalpegels selektierten Zeitschlitz, der u.U. der gleiche wie beim ersten Versuch eines Verbindungsaufbaus sein kann, gemäß dem DECT-Standard (vgl. ETSI-Publikation ETS 300175-3, Oktober 1992, Kapitel 10.5) die erste Meldung "ACCESS_REQUEST" zur Basisstation BS, RFP (zweiter Versuch eines Verbindungsaufbaus). Auch dieser von der Kanalselektion ausgesuchte Zeitschlitz ist wieder ein ungerader Zeitschlitz ZS₂ₙ₊₁, der an der Basisstation BS, RFP nicht zur Verfügung steht. Alternativ ist aber auch wieder möglich, daß die erste Meldung aufgrund von Störungen auf der Funkstrecke nicht bei der Basisstation BS, RFP angekommen ist. In beiden Fällen erkennt das Mobilteil MTₘ, RPPₘ wieder, daß der zweite Versuch eine Verbindung zur Basisstation BS, RFP aufzubauen, ebenfalls fehlgeschlagen hat daran, daß es die zweite Meldung "BEARER_CONFIRM" von der Basisstation BS, RFP entweder absichtlich, weil der verwendete Zeitschlitz ein ungerader Zeitschlitz gewesen ist oder unabsichtlich, weil es wieder eine Störung auf der Funkstrecke gegeben hat, nicht erhalten hat.

Bevor das Mobilteil MTₘ, RPPₘ einen weiteren Versuch startet, markiert es auch diesen Zeitschlitz, auf den es zuvor zum zweiten Mal vergebens versucht hat, eine Verbindung zu der Basisstation BS, RFP aufzubauen, als einen - wie die ungeraden Zeitschlitze ZS₂ₙ₊₁ - nicht verfügbaren Zeitschlitz. In FIGUR 8 ist dieser nicht verfügbare Zeitschlitz wieder als schraffiertes Kästchen dargestellt. Durch diese erneute Markierung wird die Anzahl möglicher, für den Verbindungsaufbau in Frage kommender Zeitschlitze weiter gezielt herabgesetzt und dadurch - insbesondere aufgrund der bei der Beschreibung der FIGUR 7 angesprochenen Gefahr, daß durch die Störsignalpegelauswertung bei der Kanal- bzw. Zeitschlitzselektion immer der gleiche Zeitschlitz verwendet wird - die Wahrscheinlichkeit für das Zustandekommen einer Verbindung bei weiteren Versuchen erhöht.

Das Mobilteil MTₘ, RPPₘ unternimmt daraufhin einen dritten Versuch. Im vorliegenden Fall führt dieser Versuch zum Erfolg. Das Mobilteil MTₘ, RPPₘ hat dieses Mal einen geraden Zeitschlitz ZS₂ₙ erwischt, der für den Aufbau von Telekommunikationsverbindungen mit der Basisstation BS, RFP belegbar (frei) ist. Gewißheit hierüber hat das Mobilteil MTₘ, RPPₘ jedoch erst dann, wenn es die zweite Meldung "BEARER_CONFIRM" erhalten hat. Vor dem Erhalt dieser Meldung kann das Mobilteil MTₘ, RPPₘ - wie in FIGUR 8 dargestellt - beispielsweise noch eine Broadcast-Information BCI ohne eine Zusatzinformation empfangen.

Die erste Meldung wird von dem Mobilteil MTₘ, RPPₘ solange übertragen, bis
a) das Mobilteil MTₘ, RPPₘ noch keine zweite Meldung erhalten hat,
b) die 10 Versuche für einen MAC-Schichtaufbau bzw. die 15 Versuche für einen Bearer-Handover noch nicht überschritten worden sind,
c) eine m-te erste Meldung, die nach dem Erhalt der Zusatzinformation noch gesendet wird, übertragen worden ist.

Die Markierung der Zeitschlitz (Funkkanäle) erfolgt vorzugsweise durch das Speichern von kanalspezifischen Kennungen.

Die Markierung der Zeitschlitze (Funkkanäle) wird gelöscht und die Anzahl n der Versuche für den Verbindungsaufbau wird auf den Ausgangswert zurückgesetzt wird, wenn das Mobilteil MTₘ, RPPₘ
(i) die Zusatzinformation BSI erhalten hat, oder
(ii) die zweite Meldung "BEARER_CONFIRM" erhalten hat oder
(iii) jeweils eine vorgegebene Anzahl n der ersten Meldungen "ACCESS_REQUEST" übertragen hat.

## Patentansprüche

1. Verfahren zum Aufbauen von Telekommunikationsverbindungen zwischen ersten Telekommunikationsgeräten und zweiten Telekommunikationsgeräten in drahtlosen Telekommunikationssystemen, insbesondere zwischen einem DECT-Festteil (Fixed Part) und einem DECT-Mobilteil (Portable Part) eines DECT-Systems, bei dem gemäß einer hybriden das TDMA-Prinzip enthaltenden Vielfachzugriffsmethode
a) Zusatzinformationen (BSI, BCI) von den ersten Telekommunikationsgeräten (BS, RFP) zu den zweiten Telekommunikationsgeräten (MT, MTₘ, RPP) auf Funkkanälen übertragen werden können, die angeben, daß für die Telekommunikationsverbindungen mit den ersten Telekommunikationsgeräten (BS, RFP) erste Funkkanäle (ZS₂ₙ, ZS₂ₙ₊₁) verfügbar sind und zweite Funkkanäle (ZS₂ₙ₊₁, ZS₂ₙ) nicht verfügbar sind,
b) erste Anforderungsinformationen (ACCESS REQUEST) zum Verbindungsaufbau von den zweiten Telekommunikationsgeräten (MT, MTₘ, RPP) zu den ersten Telekommunikationsgeräten (BS, RFP) auf den ersten Funkkanälen (ZS₂ₙ, ZS₂ₙ₊₁) oder den zweiten Funkkanälen (ZS₂ₙ₊₁, ZS₂ₙ) übertragen werden, wenn die zweiten Telekommunikationsgeräte (MT, MTₘ, RPP) keine Zusatzinformationen (BSI, BCI) erhalten haben,
c) zweite Anforderungsinformationen (ACCESS REQUEST) zum Verbindungsaufbau von den zweiten Telekommunikationsgeräten (MT, MTₘ, RPP) zu den ersten Telekommunikationsgeräten (BS, RFP) auf den ersten Funkkanälen übertragen werden, wenn die zweiten Telekommunikationsgeräte (MT, MTₘ, RPP) die Zusatzinformationen (BSI, BCI) erhalten haben,
d) Antwortinformationen (BEARER CONFIRM) von den ersten Telekommunikationsgeräten (BS, RFP) zu den zweiten Telekommunikationsgeräten (MT, MTₘ, RPP) übertragen werden, wenn die ersten oder zweiten Anforderungsinformationen (ACCESS_REQUEST) auf den ersten Funkkanälen (ZS₂ₙ, ZS₂ₙ₊₁) empfangen worden sind,
e) die zweiten Telekommunikationsgeräte (MT, MTₘ, RPP) solange die ersten Anforderungsinformationen (ACCESS REQUEST) an die ersten Telekommunikationsgeräte (BS, RFP) übertragen, bis sie
e1) die Zusatzinformationen (BSI, BCI) erhalten haben, oder
e2) die Antwortinformationen (BEARER_CONFIRM) erhalten haben oder
e3) jeweils eine vorgegebene Anzahl n der ersten Anforderungsinformationen (ACCESS_REQUEST) übertragen haben,
f) das jeweilige zweite Telekommunikationsgerät (MTₘ, RPPₘ), das die erste Anforderungsinformation (ACCESS_REQUEST) an das jeweilige erste Telekommunikationsgerät (BS, RFP) übertragen hat und von dem ersten Telekommunikationsgerät (BS, RFP) keine Antwortinformation (BEARER_CONFIRM) erhalten hat, den verwendeten Funkkanal (ZS₂ₙ, ZS₂ₙ₊₁) als einen dritten Funkkanal bzw. als dritte Funkkanäle registriert, auf dem bzw. auf denen die Übertragung von weiteren ersten Anforderungsinformationen (ACCESS_REQUEST) des jeweiligen zweiten Telekommunikationsgerätes (MTₘ, RPPₘ) ausgeschlossen wird.

2. Verfahren nach Anspruch 1, **dadurch gekennzeichnet**, daß der Funkkanal bzw. die Funkkanäle als dritter Funkanal bzw. als dritte Funkkanäle durch das Speichern von kanalspezifischen Kennungen registriert wird bzw. werden.

3. Verfahren nach Anspruch 1 oder 2, **dadurch gekennzeichnet**, daß der registrierte dritte Funkkanal bzw. die registrierten dritten Funkkanäle gelöscht wird/werden und die Anzahl n auf den Ausgangswert zurückgesetzt wird, wenn das jeweilige zweite Telekommunikationsgerät (MTₘ, RPPₘ)
(i) die Zusatzinformation (BSI, BCI) erhalten hat, oder
(ii) die Anwortinformation (BEARER_CONFIRM) erhalten hat oder
(iii) jeweils eine vorgegebene Anzahl n der ersten Anforderungsinformationen (ACCESS_REQUEST) übertragen hat.

4. Verfahren nach einem der Ansprüche 1 bis 3, **dadurch gekennzeichnet**, daß
das erste Telekommunikationsgerät (BS, RFP) eine Schnurlos-Basisstation und das zweite Telekommunikationsgerät (MTₘ, RFPₘ) ein Schnurlos-Mobilteil ist.

5. Verfahren nach einem der Ansprüche 1 bis 3, **dadurch gekennzeichnet**, daß
das erste Telekommunikationsgerät (BS, RFP) und das zweite Telekommunikationsgerät (MTₘ, RFPₘ) ein Schnurlos-Mobilteil sind.

6. Verfahren nach einem der Ansprüche 1 bis 5, **dadurch gekennzeichnet**, daß
dem Funkkanal (ZS₂ₙ, ZS₂ₙ₊₁) ein TDMA-Zeitschlitz zugeordnet ist bzw. den Funkkanälen (ZS₂ₙ, ZS₂ₙ₊₁) TDMA-Zeitschlitze zugeordnet sind.

7. Verfahren nach Anspruch 6, **dadurch gekennzeichnet**, daß
die Zusatzinformationen (BSI, BCI) DECT/GAP-spezifische "Blind Slot"-Informationen sind.

8. Verfahren nach einem der Ansprüche 1 bis 7, **dadurch gekennzeichnet**, daß
die ersten Anforderungsinformationen (ACCESS_REQUEST) und die zweiten Anforderungsinformationen (ACCESS_REQUEST) DECT/GAP-spezifische Informationen zum Einleiten des Aufbaus von Telekommunikationsverbindungen sind.

9. Verfahren nach einem der Ansprüche 1 bis 8, **dadurch gekennzeichnet**, daß
die ersten Anforderungsinformationen (ACCESS_REQUEST) und die zweiten Anforderungsinformationen (ACCESS_REQUEST) DECT/GAP-spezifische Informationen zum Einleiten des Aufbaus von Telekommunikationsverbindungen sind, wobei die aufzubauenden Telekommunikationsverbindungen bestehende Telekommuniationsverbindungen ersetzen sollen (Bearer Handover).

10. Verfahren nach Anspruch 8, **dadurch gekennzeichnet**, daß
die vorgegebene Anzahl n der ersten Anforderungsinformationen gleich zehn ist.

11. Verfahren nach Anspruch 9, **dadurch gekennzeichnet**, daß
die vorgegebene Anzahl n der ersten Anforderungsinformationen gleich fünfzehn ist.

## Claims

1. Method for setting up telecommunications links between first telecommunications appliances and second telecommunications appliances in wire-free telecommunications systems, in particular between a DECT fixed part and a DECT mobile part (portable part) in a DECT system, in which, using a hybrid multiple access method which includes the TDMA principle,
a) additional information (BSI, BCI) can be transmitted on radio channels from the first telecommunications appliances (BS, RFP) to the second telecommunications appliances (MT, MTₘ, RPP), which information indicates that first radio channels (ZS₂ₙ, ZS₂ₙ₊₁) are available, and second radio channels (ZS₂ₙ₊₁, ZS₂ₙ) are not available, for the telecommunications links to the first telecommunications appliances (BS, RFP),
b) first request information (ACCESS_REQUEST) for setting up links from the second telecommunications appliances (MT, MTₘ, RPP) to the first telecommunications appliances (BS, RFP) is transmitted on the first radio channels (ZS₂ₙ, ZS₂ₙ₊₁) or on the second radio channels (ZS₂ₙ₊₁, ZS₂ₙ) if the second telecommunications appliances (MT, MTₘ, RPP) have not received any additional information (BSI, BCI),
c) second request information (ACCESS_REQUEST) for setting up links from the second telecommunications appliances (MT, MTₘ, RPP) to the first telecommunications appliances (BS, RFP) is transmitted on the first radio channels if the second telecommunications appliances (MT, MTₘ, RPP) have received the additional information (BSI, BCI),
d) response information (BEARER_CONFIRM) is transmitted from the first telecommunications appliances (BS, RFP) to the second telecommunications appliances (MT, MTₘ, RPP) if the first or second request information (ACCESS_REQUEST) on the first radio channels (ZS₂ₙ, ZS₂ₙ₊₁) has been received,
e) the second telecommunications appliances (MT, MTₘ, RPP) transmit the first request information (ACCESS_REQUEST) to the first telecommunications appliances (BS, RFP) until they
e1) have received the additional information (BSI, BCI), or
e2) have received the response information (BEARER_CONFIRM), or
e3) have in each case transmitted a predetermined number n of first request information items (ACCESS REQUEST),
f) the respective second telecommunications appliance (MTₘ, RPPₘ), which has transmitted the first request information (ACCESS_REQUEST) to the respective first telecommunications appliance (BS, RFP) and has not received any response information (BEARER_CONFIRM) from the first telecommunications appliance (BS, RFP) registers the radio channel (ZS₂ₙ, ZS₂ₙ₊₁) being used as a third radio channel or as third radio channels, on which it is not possible to transmit further first request information (ACCESS_REQUEST) of the respective second telecommunications appliance (MTₘ, RPPₘ).

2. Method according to Claim 1, characterized in that the radio channel or the radio channels is or are registered as the third radio channel or as third radio channels by storing channel-specific identifiers.

3. Method according to Claim 1 or 2, characterized in that
the registered third radio channel or the registered third radio channels is or are deleted and the number n is reset to the initial value when the respective second telecommunications appliance (MTₘ, RPPₘ)
(i) has received the additional information (BSI, BCI), or
(ii) has received the response information (BEARER_CONFIRM), or
(iii) has in each case transmitted a predetermined number n of first request information items (ACCESS_REQUEST).

4. Method according to one of Claims 1 to 3, characterized in that
the first telecommunications appliance (BS, RFP) is a cordless base station, and the second telecommunications appliance (MTₘ, RFPₘ) is a cordless mobile part.

5. Method according to one of Claims 1 to 3, characterized in that
the first telecommunications appliance (BS, RFP) and the second telecommunications appliance (MTₘ, RFPₘ) are a cordless mobile part.

6. Method according to one of Claims 1 to 5, characterized in that
the radio channel (ZS₂ₙ, ZS₂ₙ₊₁) is allocated a TDMA time slot, or the radio channels (ZS₂ₙ, ZS₂ₙ₊₁) are allocated TDMA time slots.

7. Method according to Claim 6, characterized in that
the additional information (BSI, BCI) is DECT/GAP-specific "blind slot" information.

8. Method according to one of Claims 1 to 7, characterized in that
the first request information (ACCESS_REQUEST) and the second request information (ACCESS_REQUEST) are DECT/GAP-specific information in order to initiate the setting up of telecommunications links.

9. Method according to one of Claims 1 to 8, characterized in that
the first request information (ACCESS_REQUEST) and the second request information (ACCESS_REQUEST) are DECT/GAP-specific information in order to initiate the setting up of telecommunications links, in which the telecommunications links to be set up are- intended to replace existing telecommunications links (Bearer Handover).

10. Method according to Claim 8, characterized in that
the predetermined number n of first request information items is equal to ten.

11. Method according to Claim 9, characterized in that
the predetermined number n of first request information items is equal to fifteen.

## Revendications

1. Procédé pour l'établissement de liaisons de télécommunication entre des premiers appareils de télécommunication et des deuxièmes appareils de télécommunication dans des systèmes de télécommunication sans fil, notamment entre une partie fixe DECT (Fixed Part) et une partie mobile DECT (Portable Part) d'un système DECT, dans lequel, selon une méthode d'accès multiple hybride contenant le principe TDMA,
a) on peut transmettre des informations supplémentaires (BSI, BCI) des premiers appareils de télécommunication (BS, RFP) aux deuxièmes appareils de télécommunication (MT, MTₘ, RPP) sur des canaux radio, lesquelles informations supplémentaires indiquent que pour les liaisons de télécommunication avec les premiers appareils de télécommunication (BS, RFP) des premiers canaux radio (ZS₂ₙ, ZS₂ₙ₊₁) sont disponibles et des deuxièmes canaux radio (ZS₂ₙ₊₁, ZS₂ₙ) ne sont pas disponibles,
b) on transmet des premières informations de demande (ACCESS_REQUEST) pour l'établissement de liaison des deuxièmes appareils de télécommunication (MT, MTₘ, RPP) aux premiers appareils de télécommunication (BS, RFP) sur les premiers canaux radio (ZS₂ₙ, ZS₂ₙ₊₁) ou sur les deuxièmes canaux radio (ZS₂ₙ₊₁, ZS₂ₙ) lorsque les deuxièmes appareils de télécommunication (MT, MTₘ, RPP) n'ont pas reçu d'informations supplémentaires (BSI, BCI),
c) on transmet des deuxièmes informations de demande (ACCESS_REQUEST) pour l'établissement de liaison des deuxièmes appareils de télécommunication (MT, MTₘ, RPP) aux premiers appareils de télécommunication (BS, RFP) sur les premiers canaux radio lorsque les deuxièmes appareils de télécommunication (MT, MTₘ, RPP) ont reçu les informations supplémentaires (BSI, BCI),
d) on transmet des informations de réponse (BEARER_CONFIRM) des premiers appareils de télécommunication (BS, RFP) aux deuxièmes appareils de télécommunication (MT, MTₘ, RPP) lorsque les premières ou deuxièmes informations de demande (ACCESS_REQUEST) ont été reçues sur les premiers canaux radio (ZS₂ₙ, ZS₂ₙ₊₁),
e) les deuxièmes appareils de télécommunication (MT, MTₘ, RPP) transmettent les premières informations de demande (ACCESS_REQUEST) aux premiers appareils de télécommunication (BS, RFP) jusqu'à ce qu'ils
e1) aient reçu les informations supplémentaires (BSI, BCI), ou
e2) aient reçu les informations de réponse (BEARER_CONFIRM), ou
e3) aient transmis à chaque fois un nombre prédéterminé n de premières informations de demande (ACCESS_REQUEST),
f) le deuxième appareil de télécommunication respectif (MTₘ, RPPₘ), qui a transmis la première information de demande (ACCESS_REQUEST) au premier appareil de télécommunication respectif (BS, RFP) et qui n'a reçu aucune information de réponse (BEARER_CONFIRM) du premier appareil de télécommunication (BS, RFP) enregistre le canal radio utilisé (ZS₂ₙ, ZS₂ₙ₊₁) comme étant un troisième canal radio ou des troisièmes canaux radio sur lequel ou sur lesquels la transmission d'autres premières informations de demande (ACCESS_REQUEST) du deuxième appareil de télécommunication respectif (MTₘ, RPPₘ) est exclue.

2. Procédé selon la revendication 1, caractérisé par le fait que l'on enregistre le canal radio ou les canaux radio comme troisième canal radio ou comme troisièmes canaux radio en mémorisant des identifications spécifiques au canal ou aux canaux.

3. Procédé selon la revendication 1 ou 2, caractérisé par le fait que l'on efface le troisième canal radio enregistré ou les troisièmes canaux radio enregistrés et on remet à sa valeur initiale le nombre n lorsque le deuxième appareil de télécommunication respectif (MTₘ, RPPₘ)
(i) a reçu l'information supplémentaire (BSI, BCI), ou
(ii) a reçu l'information de réponse (BEARER_CONFIRM) ou
(iii) a transmis à chaque fois un nombre prédéterminé n de premières informations de demande (ACCESS_REQUEST).

4. Procédé selon l'une des revendications 1 à 3, caractérisé par le fait que le premier appareil de télécommunication (BS, RFP) est une station de base sans fil et le deuxième appareil de télécommunication (MTₘ, RFPₘ) est une station mobile sans fil.

5. Procédé selon l'une des revendications 1 à 3, caractérisé par le fait que le premier appareil de télécommunication (BS, RFP) et le deuxième appareil de télécommunication (MTₘ, RFPₘ) sont chacun une station mobile sans fil.

6. Procédé selon l'une des revendications 1 à 5, caractérisé par le fait qu'un créneau temporel TDMA est associé au canal radio (ZS₂ₙ, ZS₂ₙ₊₁) ou que des créneaux temporels TDMA sont associés aux canaux radio (ZS₂ₙ, ZS₂ₙ₊₁).

7. Procédé selon la revendication 6, caractérisé par le fait que les informations supplémentaires (BSI, BCI) sont des informations "Blind Slot" spécifiques au DECT/GAP.

8. Procédé selon l'une des revendications 1 à 7,
caractérisé par le fait que les premières informations de demande (ACCESS_REQUEST) et les deuxièmes informations de demande (ACCESS_REQUEST) sont des informations spécifiques au DECT/GAP pour déclencher l'établissement de liaisons de télécommunication.

9. Procédé selon l'une des revendications 1 à 8, caractérisé par le fait que les premières informations de demande (ACCESS_REQUEST) et les deuxièmes informations de demande (ACCESS_REQUEST) sont des informations spécifiques au DECT/GAP pour déclencher l'établissement de liaisons de télécommunication, les liaisons de télécommunication à établir devant remplacer des liaisons de télécommunication existantes (Bearer Handover).

10. Procédé selon la revendication 8, caractérisé par le fait que le nombre prédéterminé n des premières informations de demande est égal à dix.

11. Procédé selon la revendication 9, caractérisé par le fait que le nombre prédéterminé n des premières informations de demande est égal à quinze.
